# EUROPÄISCHE PATENTSCHRIFT

(11) **EP 0 594 163 B1**
(45) Veröffentlichungstag und Bekanntmachung des Hinweises auf die Patenterteilung: **18.09.1996**
(21) Anmeldenummer: 93117036.9
(22) Anmeldetag: 21.10.1993
(51) Int. Cl.: G01B 5/255, G01M 17/06

(54) **Einrichtung zur Vermessung der Achsgeometrie an den Radachsen von Kraftfahrzeugen bei drehenden Rädern**
Device for measuring the axial geometry of the axles of motor vehicles whilst the wheels are rotating
Dispositif pour mesurer à roues tournantes la géométrie axiale des axes d'automobiles

(30) Priorität: 23.10.1992 DE 9214352 U
(43) Veröffentlichungstag der Anmeldung: 27.04.1994
(73) Patentinhaber: SCHENCK KOMEG GmbH, D-66571 Eppelborn (DE)
(72) Erfinder: Rolinger, Dieter, D-66773 Schwalbach (DE); Greff, Uwe, Dipl.-Ing., D-66271 Kleinblittersdorf (DE); Fries, Rüdiger, Dipl.-Ing., D-66538 Neunkirchen (DE)
(74) Vertreter: Vièl, Georg, Dipl.-Ing.

(56) Entgegenhaltungen:
- DE-A- 4 204 276
- DE-C- 3 830 048
- DE-C- 3 830 049
- PATENT ABSTRACTS OF JAPAN vol. 9, no. 40 (P-336)(1763) 20. Februar 1985 & JP-A-59 180 447 (KOGYO GIJUTSUIN) 13. Oktober 1984
- PATENT ABSTRACTS OF JAPAN vol. 9, no. 40 (P-336)(1763) 20. Februar 1985 & JP-A-
- 59 180 447 (KOGYO GIJUTSUIN) 13. Oktober 1984
- PATENT ABSTRACTS OF JAPAN vol. 9, no. 40 (P-336)(1763) 20. Februar 1985 & JP-A-59 180 447

## Beschreibung

Die Erfindung betrifft eine Vorrichtung zur Vermessung der Achsgeometrie an den Radachsen von Kraftfahrzeugen bei drehenden Rädern mit mindestens zwei im wesentlichen im Abstand der Spurweite des Kraftfahrzeuges angeordneten, antreibbaren Aggregaten, wobei die Vorder-bzw. Hinterräder des Kraftfahrzeuges auf die Aggregate aufsetzbar sind und jedes Aggregat in einer horizontalen Ebene gegenüber einem Grundgestell angeordnet ist, wobei zur Aufnahme der Räder mindestens einer Achse antreibbare, endlose als Fördergurt ausgebildete Bänder vorgesehen sind.

Bei bekannten Vorrichtungen zur Vermessung der Achsgeometrie befindet sich das zu vermessende Kraftfahrzeug in der Regel sowohl mit den Vorder- als auch mit den Hinterrädern jeweils auf einem Laufwalzenpaar. Die Laufwalzenpaare sind auf untergebauten Schwimmplatten angeordnet, die horizontal bewegbar sind und damit das Fahrwerk des Fahrzeugs entspannen und zu den Einstellwerkzeugen bzw. Meßeinheiten positionieren (EP-PS 0 199 913). Diese bekannten Einrichtungen sind nicht für die sogenannte Mixed-Produktion brauchbar, weil die Laufwalzenpaare für die Vorderräder und die Hinterräder einen festen Abstand haben.

Einrichtungen zur Vermessung der Achsgeometrie von Kraftfahrzeugen bei variablen Achsabständen in der Mixed-Produktion sind auch bekannt, wobei die Laufwalzenpaare für die Hinterräder auf Verfahreinheiten aufgebaut sind, die entsprechend dem Achsabstand positioniert werden (KOMEG-Prospekt 88/511-1a "Der KOMEG-Fahrwerkstand"). Diese Verfahreinheiten bedingen verfahrbare Grubenabdeckungen, die die variablen Öffnungen vor sowie im Fahrwerkstand zwischen den Achsen abdecken. Diese Anordnung ist sehr kostenintensiv und verbaut die Zugänglichkeit der Fahrzeugunterseite von der Grube aus gesehen.

Aus der JP-A-59 180 447 ist eine Vorrichtung zum Simulieren unebenen Geländes bzw. ungleichmäßiger Straßenbeläge bekannt, bei der die Räder eines Fahrzeuges auf beweglichen Fördergurten ruhen. Die Fördergurte laufen auf Rollen, die auf Tischen angeordnet sind, die um eine vertikale Achse frei beweglich sind und beidseits durch Druckzylinder abgestützt sind.

Die DE-C-38 30 048 betrifft eine Flachbahneinheit für Kraftfahrzeug-Prüfstände, bei der ein fahrbahnsimulierendes Band über Umlenkwalzen geführt und im Aufstandsbereich eines Fahrzeugrades flacheben abgestützt ist. Unterhalb der Flachbahneinheit ist ein vertikal ausgerichteter Anregungszylinder zur Simulation von Fahrbahnerschütterungen angeordnet.

In der DE-C-38 30 049 wird ebenfalls eine Flachbahneinheit für Kraftfahrzeug-Prüfstände beschrieben, wobei über einen Stützschuh mittels eines Anregungszylinders kurzhubige und hochfrequente Schwingungen und durch einen anregbaren Rahmen, in dem die bandführenden Walzen gelagert sind, langhubige und niederfrequente Schwingungen auf ein Fahrzeugrad übertragen werden.

Aus der DE-A-42 04 276 ist eine Vorrichtung zur Ermittlung der Achsrichtung der Hinterachse eines Fahrzeuges gemäß dem Oberbegriff bekannt, die für die Hinterräder eine vorgegebene Querachse definierende, ortsfeste Rollenstützen sowie für die Vorderräder individuelle Schwimmplatten aufweist. Bei Antrieb der Räder durch diese Aufstandsmittel ergeben sich infolge der Arretierung der Hinterräder durch die Rollenstützen Positionen und Orientierungen der Schwimmplatten, die Aussagen über die Achsgeometrie liefern.

Der Erfindung liegt die Aufgabe zugrunde, eine für die Mixed-Produktion von Kraftfahrzeugen geeignete Vorrichtung gemäß dem Oberbegriff zu schaffen, wobei die Fördergurteinheiten (drei) definierte Freiheitsgrade aufweisen.

Diese Aufgabe wird erfindungsgemäß dadurch gelöst, daß ein ein jedes Band abstützender Grundkörper vorgesehen ist, der sich auf einer Grundplatte abstützt, wobei schließbare Zentriervorrichtungen zum Definieren von Freiheitsgraden des Grundkörpes bezüglich der Grundplatte vorhanden sind.

Eine Weiterbildung der Erfindung besteht darin, daß der Grundkörper in horizontaler Ebene schwimmend gelagert ist und durch Schließen keines, eines oder beider Zentriermittel der Grundkörper bezüglich der Grundplatte wahlweise frei schwimmbar, um eine Drehachse schwenkbar oder in einer Mittelstellung zentrierbar ist.

Erfindungsgemäß ist auch vorgesehen, daß der Grundkörper eine vertikale Drehachse aufweist und daß sich der Grundkörper über eine Zwischenplatte mittels eines Linearführungssystems auf der Grundplatte abstützt.

Nach der Erfindung ist weiterhin vorgesehen, daß die Zentriereinrichtungen aus einem Hebelsystem bestehen, auf dem die Zentrierrollen befestigt sind, welche durch Pneumatikzylinder verstellbar sind.

Erfindungsgemäß ist weiterhin vorgesehen, daß die Zentriereinrichtungen aus einem Hebelsystem bestehen, auf dem ein Schieber befestigt ist, welcher durch Pneumatikzylinder verstellbar ist.

Erfindungsgemäß ist weiterhin vorgesehen, daß die Zentrierrollen bzw. der Schieber hydraulisch, mechanisch oder elektrisch verfahrbar sind.

Außerdem ist erfindungsgemäß vorgesehen, daß zur Festlegung der Zwischenplatte gegenüber der Grundplatte eine Bremse vorgesehen ist.

Die mit der Erfindung erzielten Vorteile bestehen im wesentlichen darin, daß eine Einrichtung zur Vermessung der Achsgeometrie an den Radachsen von Kraftfahrzeugen bei drehenden Rädern geschaffen worden ist, die trotz der Möglichkeit, eine Mixed-Produktion von Kraftfahrzeugen durchzuführen, eine den Hinterrädern und/oder den Vorderrädern zugeordnete feste Einrichtung aufweist, die allerdings in sich beweglich ist. Des weiteren übernimmt das erfindungsgemäße endlose Band im Zusammenhang mit einem Gurtfördersystem z.B. das Durchfördern eines Fahrzeugs durch einen Fahrwerkstand, zusammen mit den vor- und nachgeschalteten Förderbändern, d.h. teleskopierende Transportbänder oder ähnliche in der Baulänge variabel gestaltete Transportstrecken werden überflüssig.

Die Erfindung wird anhand der Zeichnungen näher beschrieben.
- Fig. 1: zeigt in einer groben Übersicht eine Einrichtung nach der Erfindung von der Seite her gesehen,
- Fig. 2: das erfindungsgemäße endlose Band mit den dazugehörigen Vorrichtungen,
- Fig. 3: den Schnitt A-A von Fig. 2,
- Fig. 4: den Schnitt B-B zu Fig. 2,
- Fig. 5: das erfindungsgemäße endlose Band in der Ausführung mit vertikaler Drehachse, Zwischenplatte mit Bremse und Grundkörper,
- Fig. 6: den Schnitt A-A von Fig. 5 und
- Fig. 7: den Schnitt B-B von Fig. 5.

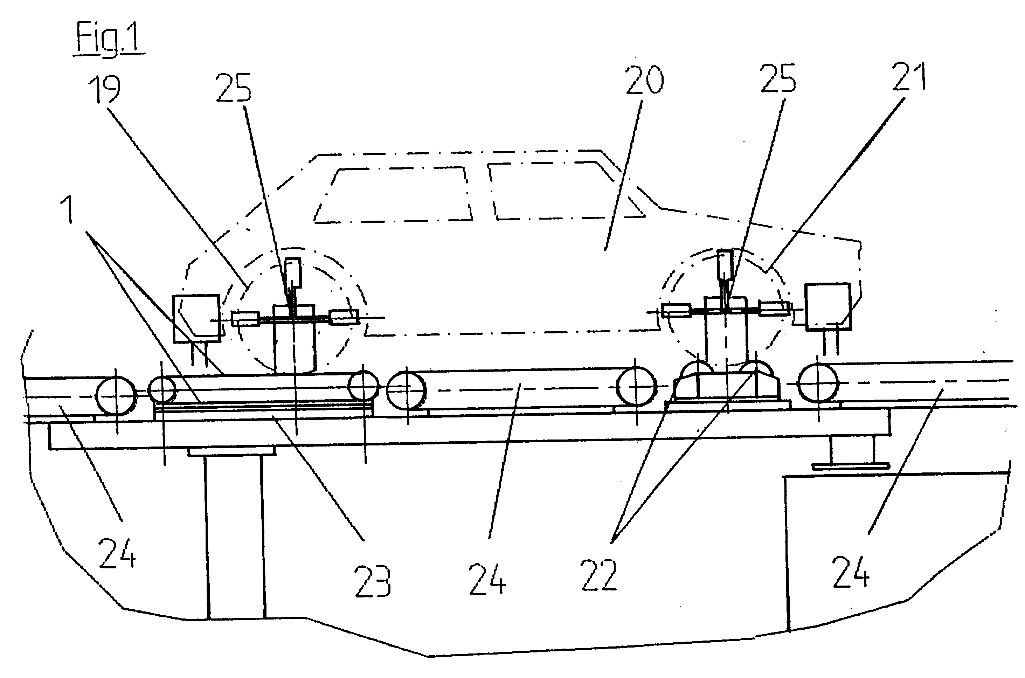

Fig. 1 zeigt schematisch eine Einrichtung nach der Erfindung zur Vermessung der Achsgeometrie eines Kraftfahrzeugs 20. Die Vorderräder 21 befinden sich in an sich bekannter Weise auf einem Laufwalzenpaar 22. Den Hinterrädern 19 ist gemäß der Erfindung ein antreibbares, endloses, als Fördergurt ausgebildetes Band 1 zugeordnet. Dadurch, daß an Stelle eines Laufwalzenpaares für die Hinterräder dieses endlose Band 1 vorgesehen ist, ist eine Mixed-Produktion von Kraftfahrzeugen 20 möglich, weil angesichts dieses endlosen Bandes 1 ohne weiteres Kraftfahrzeuge 20 unterschiedlicher Achsstände vermessen werden können. Das endlose Band 1 ist in einer Vorrichtung 23 untergebracht, die fest installiert ist. In Zusammenarbeit mit einem Gurtfördersystem 24 kann das endlose Band 1 das Durchfördern von Kraftfahrzeugen 20 durch einen Fahrwerkstand gemäß Fig. 1 realisieren, ohne daß an dem Fahrwerkstand irgendetwas verstellt werden muß (teleskopierende Tranportbänder). Mit 25 sind in Fig. 1 die Meßsysteme an sich bekannter Art angedeutet, mit denen an einem Kraftfahrzeug 20 z. B. Spur, Sturz und Dackellauf gemessen bzw. eingestellt werden können.

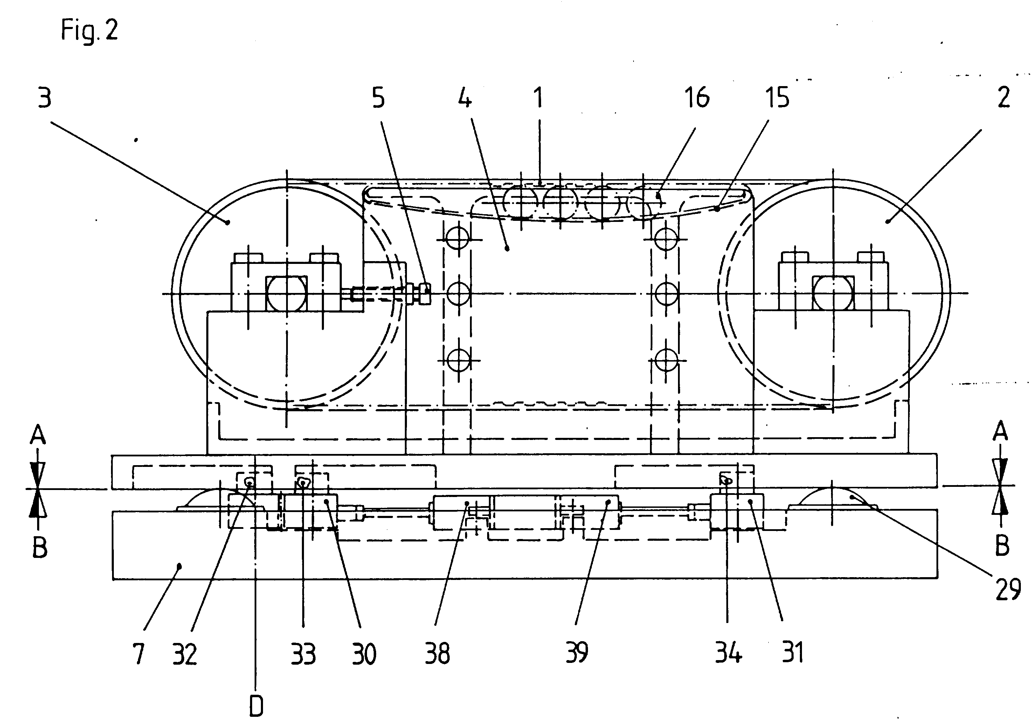

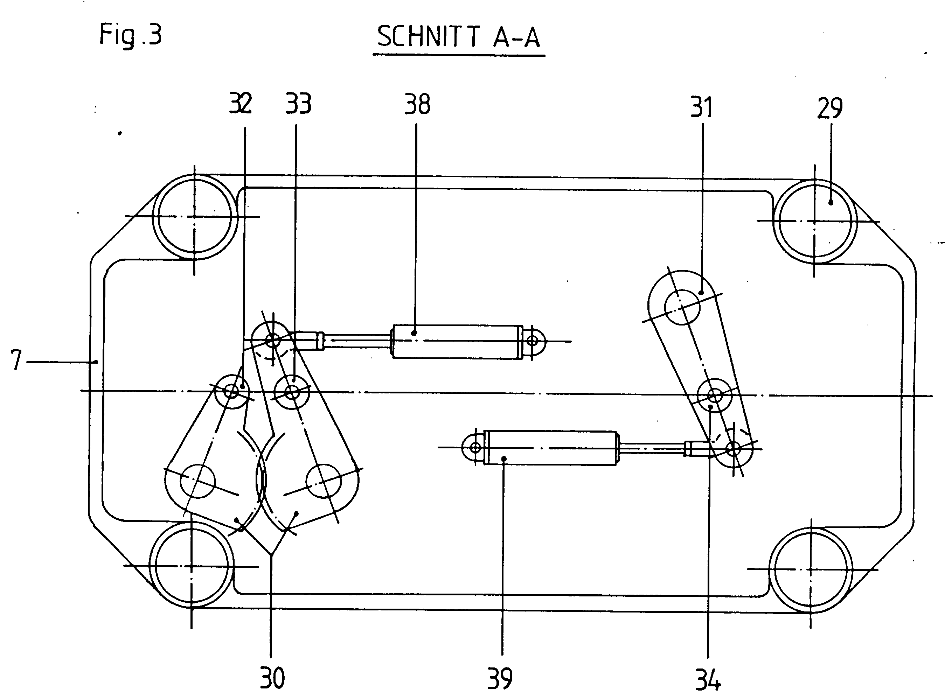

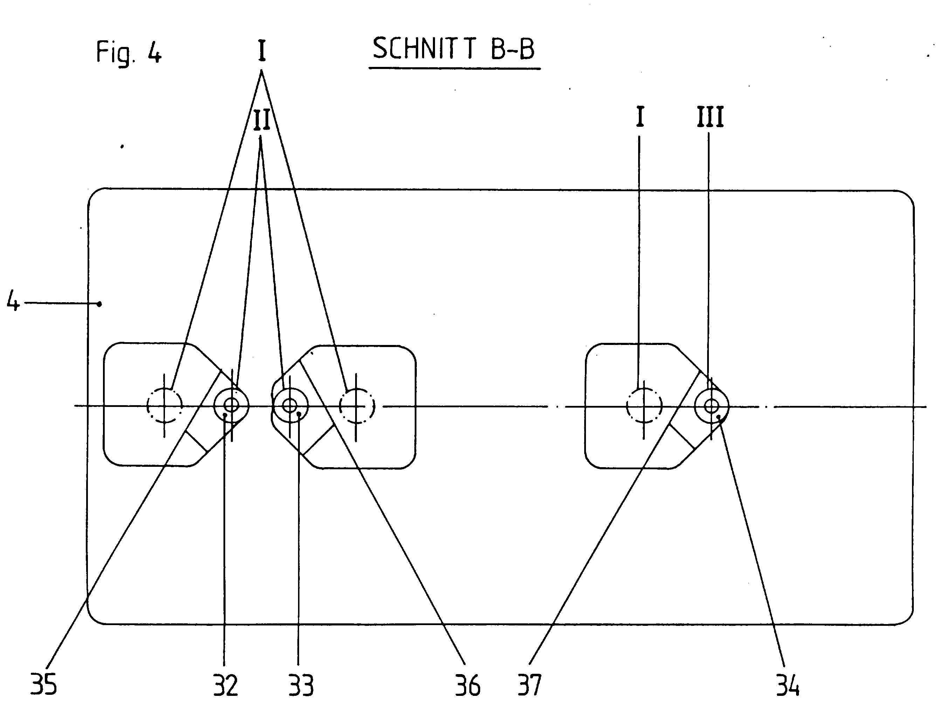

In Fig. 2 sind Einzelheiten zu dem endlosen Band 1 dargestellt. Zur Verdeutlichung der Funktionsweise sind in den Fig. 3 und 4 die Schnitte A-A und B-B aus Fig. 2 gezeichnet. Das antreibbare, endlose, als Fördergurt ausgebildete Band 1 ist über eine Antriebstrommel 2 und eine Umlenktrommel 3 gespannt. Ein Grundkürper 4 kann an seiner Oberseite als Gleitfläche ausgebildet sein, so daß sich das endlose Band 1 beim Aufsetzen eines Kraftfahrzeugs 20 darauf abstützen kann. Anstatt den Grundkörper 4 an seiner Oberseite als Gleitfläche auszubilden, ist es auch denkbar, um den oberen Teil des Grundkörpers 4 einen Gleitgurt 15 vorzusehen, auf dem sich das endlose Band 1 bei Belastung abstützt. Zur Abstützung des endlosen Bandes 1 kann erfindungsgemäß auch vorgesehen sein, im oberen Teil des Grundkörpers 4 Tragrollen 16 anzuordnen.

Das endlose Band 1 kann beispielsweise als Zahnriemen mit Gewebebandauflage auf der Zahnseite zur gleitenden Abtragung auf der Gleitfläche des Grundkörpers 4 ausgerüstet werden. Ebenso kann es sich allerdings um einen ungezahnten Flachgurt aus z. B. Gummi mit Stahleinlagen als Zugträger und Gewebeauflage zur gleitenden Abtragung auf der Unterseite des Gurtes handeln. Selbstverständlich ist es auch möglich, einen Textilgurt einzusetzen.

Die Antriebstrommel 2 kann als Trommelmotor verzahnt zum Antrieb eines gezahnten Bandes 1 oder glatt oder mit gummierter Oberfläche als Antrieb für ein glattes Band 1 ausgeführt sein. Die Antriebstrommel 2 kann auch über einen separaten, angebauten Motor durch Übertragungsmittel (Zahnräder, Zahnriemen oder ähnlichem) angetrieben werden.

Die Umlenktrommel 3 kann je nach Ausbildung des endlosen Bandes 1 verzahnt, glatt oder beispielsweise gummiert ausgeführt sein. Sie ist im Normalfall nicht angetrieben, kann aber, ebenso wie die Antriebstrommel 2, gleichfalls angetrieben werden.

Die Umlenktrommel 3 ist längsverschieblich angeordnet und hat eine Spannvorrichtung 5. Damit kann das endlose Band 1 gespannt werden. Anstelle der Spannvorrichtung 5 ist natürlich auch denkbar, eine Spannrolle auf dem Leertrum des endlosen Bandes 1 aufzusetzen (nicht dargestellt).

Der Grundkörper 4 stützt sich, in der horizontalen Ebene schwimmend gelagert, über die Kugelauflagen 29 auf der Grundplatte 7 ab (Fig. 2).

Es ist jedoch auch möglich, anstatt der Kugelauflagen 29 Stützrollen beliebiger Art zu verwenden.

Weiterhin ist vorgesehen, anstelle der Kugelauflagen 29 hydrostatische Lager zu verwenden.

Durch die Zentriereinrichtungen 30 und 31 (Fig. 3 und 4) ist es möglich, dem Grundkörper 4 drei definierte Freiheitsgrade bezüglich der Grundplatte 7 zu gewähren.

### 1. Freiheitsgrad:

- (Offene Stellung): Die Zentriervorrichtungen 30 und 31 sind geöffnet, d.h. die Zentrierrollen 32, 33 und 34 befinden sich in Pos. I (Fig. 4). Der Grundkörper 4 kann bezüglich der Grundplatte 7 frei schwimmen.

### 2. Freiheitsgrad:

- (Geführte Stellung): Die Zentriervorrichtung 30 schließt. Dadurch gleiten die Zentrierrollen 32 und 33 an den keilförmig gestalteten Flanken 35 und 36 entlang und nehmen die Pos. II ein (Fig. 4). Die Zentriervorrichtung 31 bleibt geöffnet, d.h.: Die Zentrierrolle 34 bleibt in Pos. I (Fig. 4). Dadurch ist die Drehachse D (Fig. 2) hergestellt und der Grundkörper 4 ist bezüglich der Grundplatte 7 um die Drehachse D schwenkbar.

### 3. Freiheitsgrad:

- (Zentrierte Stellung): Die Zentriervorrichtung 30 ist geschlossen und dadurch die Drehachse D hergestellt. Schließt nun die Zentriervorrichtung 31, gleitet die Zentrierrolle 34 an den keilförmig gestalteten Flanken 37 entlang. Dadurch wird die Drehung des Grundkörpers 4 um die Drehachse D begrenzt und die Mittelstellung hergestellt, sobald die Zentrierrolle 34 die Stellung III einnimmt (Fig. 4).

Die Zentriereinrichtung 30 besteht aus einem Hebelsystem, auf dem die Zentrierrollen 32 und 33 befestigt sind. Das Verstellen der Zentrierrollen 32 und 33 erfolgt durch einen Pneumatikzylinder 38 (Fig. 3).

Weiterhin ist vorgesehen, daß das Verstellen der Zentrierrollen 32 und 33 mittels eines Linearführungssystems erfolgt.

Weiterhin ist vorgesehen, anstelle des Pneumatikzylinders 38 die Zentrierrollen 32 und 33 hydraulisch (z.B. Zylinder, Motor, ...), mechanisch (z.B. Spindel, Zahnstange mit Ritzel, ...) bzw. elektrisch (z.B. Elektromotor) zu verfahren.

Weiterhin ist vorgesehen, daß die Zentrierrollen 32 und 33 durch einen entsprechend geformten Schieber ersetzt werden können.

Der Aufbau der Zentriereinrichtung 31 entspricht grundsätzlich dem der Zentriereinrichtung 30, kann jedoch, was die Anzahl der Einzelelemente beispielsweise anbelangt, auch davon abweichen.

Die Grundplatte 7 dient zur Aufnahme der Zentriereinrichtungen 30 und 31 sowie der Antriebszylinder 38 und 39. Weiterhin stellt die Grundplatte 7 die Anbindung des Grundkörpers 4 zum Grundgestell der gesamten Einrichtung bzw. eines Fahrwerkeinstellstandes her.

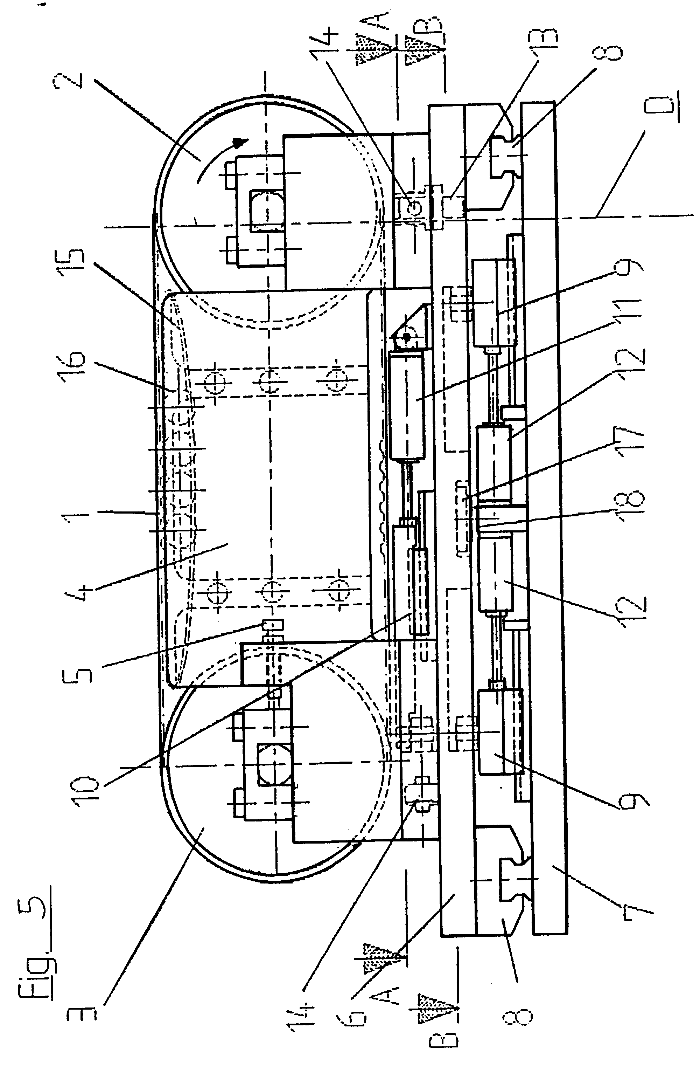

Außerdem ist eine konstruktive Ausführung vorgesehen, bei der der Grundkörper 4 eine vertikale Drehachse D besitzt und sich über eine Zwischenplatte 6 mittels eines Linearführungssystems 8 auf der Grundplatte 7 abstützt (Fig. 5 - 7).

Der Grundkörper 4 ist in der Achse der Antriebstrommel 2, d.h. um die Achse D auf dem Drehzapfen 13 schwenkbar, der in der Zwischenplatte 6 befestigt ist. Bei dem Schwenken stützt sich der Grundkörper 4 auf den Stützrollen 14 der Zwischenplatte 6 ab. - Anstatt genau in der Achse der Antriebstrommel 2 kann der Drehzapfen 13 auch vor oder hinter der Achse der Antriebstrommel 2 angeordnet sein.

Die Stützrollen 14 können ballig oder zylindrisch ausgebildet sein. Anstatt dieser Stützrollen 14 können jedoch auch Kugelauflagen beliebiger Art verwendet werden, je nach Belastung des endlosen Bandes 1.

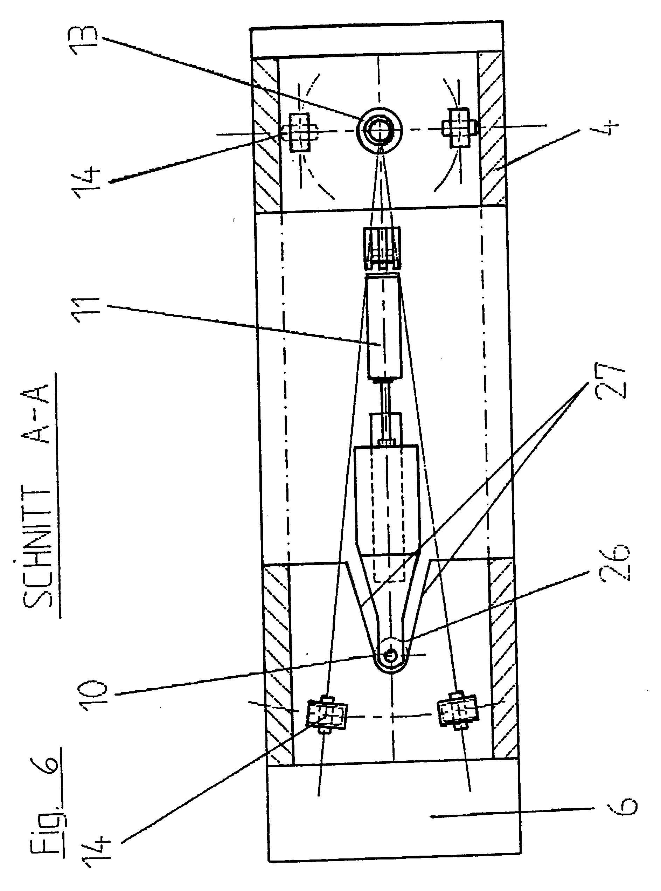

Die Mittenzentrierung 10 des Grundkörpers 4 besteht aus einem Führungssystem und einer Zentrierrolle 26, die durch einen Antriebszylinder 11 oder einen anderen geeigneten Antrieb, z. B. Spindel, Zahnstange mit Ritzelantrieb usw., verfahren wird. Die Zentrierrolle 26 gleitet an keilförmig gestalteten Flanken 27 der Zwischenplatte 6 entlang (s. Fig. 6), die die Drehung der Zwischenplatte 6 begrenzt sowie die Mittelstellung herstellt. Die Zentrierrolle 26 kann jedoch auch wahlweise durch einen entsprechend geformten feststehenden Schieber ersetzt werden.

Die Zwischenplatte 6 sitzt auf einem Linearführungssystem 8, das ein Querverschieben der Zwischenplatte 6 mit den zuvor beschriebenen Aufbauten möglich macht. Dieses Querverschieben wird durch extern eingeleitete Kräfte an dem aufgesetzten Kraftfahrzeug 20, z. B. durch sogenannte Positioniereinheiten, bewerkstelligt.

Der Aufbau der Mittenzentrierung 9 der Zwischenplatte 6 entspricht grundsätzlich dem der Mittenzentrierung 10 des Grundkörpers 4, kann jedoch, was die Zahl der Einzelelemente beispielsweise anbelangt, auch davon abweichen.

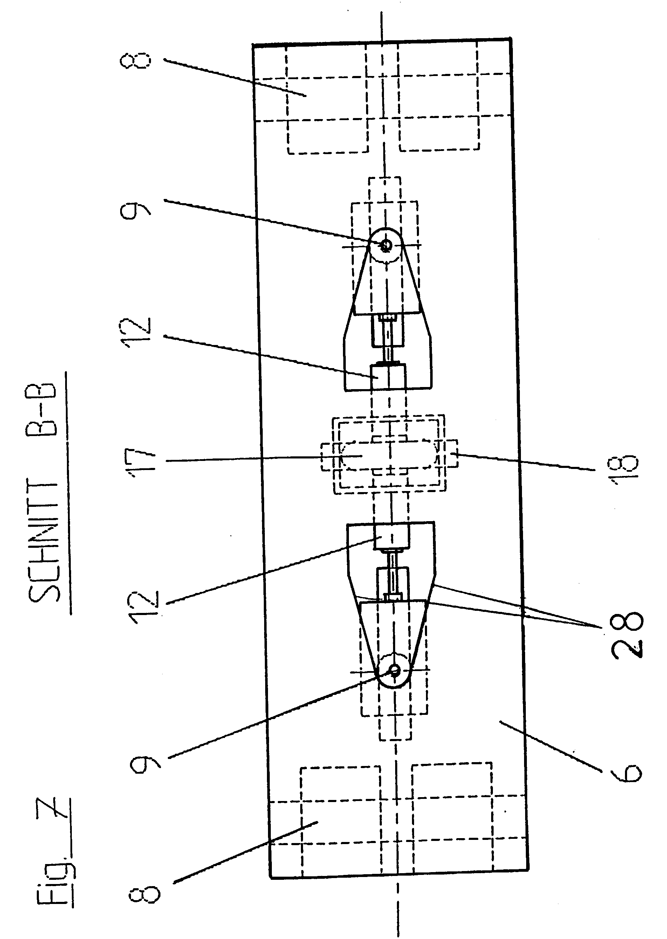

Die Mittenzentrierungen 9 für die Zwischenplatte 6 (Fig. 7) greifen in dieser in entsprechend ausgeformte keilförmige Aussparungen 28 ein, die die Querschiebebewegung der Zwischenplatte 6 mit Aufbauten begrenzen. Der Antriebszylinder 12 dient zum Zentrieren des Systems (Fig. 7). - Der Antriebszylinder 12 kann selbstverständlich durch eine andere entsprechende Stelleinheit ersetzt werden.

Bei entsprechend starrer Gestaltung des Linearführungsssytems 8 kann die Mittenzentrierung für die Querbewegung auch über eine einzige Mittenzentrierung 9 für die Zwischenplatte 6 mit einem Antriebszylinder 12 ausgeführt werden.

Die extern hervorgerufene Querverschiebung kann über die Bremse 17 (Fig. 5, Fig. 7) fixiert werden. Diese Bremse 17 kann beispielsweise ein Membranzylinder mit geführter Druckplatte, eine Spreizkeilbremse oder eine ähnliche Bremseinrichtung sein. Die Bremse 17 wirkt auf den Bremsbelag 18 (Fig. 5, Fig. 7), welcher auf der Grundplatte 7 befestigt ist.

Die Grundplatte 7 dient zur Aufnahme des Linearführungssystems 8, der Mittenzentrierung 9 für die Zwischenplatte 6 und der Antriebszylinder 12 dieser Mittenzentrierung. Des weiteren stellt die Grundplatte 7 die Anbindung der Zwischenplatte 6 zum Grundgestell der gesamten Einrichtung bzw. eines Fahrwerkstandes her.

Soll ein Kraftfahrzeug in seiner Achsgeometrie vermessen werden so ergibt sich bei der erfindungsgemäßen Einrichtung (Fig. 2 - 4) der folgende Ablauf:

Das Kraftfahrzeug wird über ein dem endlosen Band 1 vorgeschaltetes Transportband 24, manuell, mit Radschubfördersystem oder vergleichbarer Transporttechnik in die erfindungsgemäße Einrichtung bzw. einen Fahrwerkstand eingefördert. Dabei dreht sich die Antriebstrommel 2 mit einer der Fördergeschwindigkeit des Kraftfahrzeugs synchronen Geschwindigkeit. Ist das Kraftfahrzeug 20 mit den Vorderrädern 21 auf dem Laufwalzenpaar 22, so kommen die Hinterräder 19 auf dem endlosen Band 1 zum Stehen. Die Zentriereinrichtungen 30 und 31 bleiben beim Einfördern geschlossen.

Bei dem erfindungsgemäßen System ist es von Vorteil, daß das Meßsystem parallel zum Einfördern des Kraftfahrzeuges 20 auf den gewünschten Achsabstand verfahren werden kann. Bei bekannten Einrichtungen ist dieser Verstellvorgang des hinteren Laufwalzenpaares und der dazugehörigen Grubenabdeckung oder des teleskopierenden Transportbandes taktzeitabhängig, d. h. das Fördersystem muß zuerst die Meldung der erfolgten Verstellung abwarten und kann dann erst einfördern.

Nachdem das Kraftfahrzeug 20 seine Meßposition erreicht hat, d.h. die Hinterräder sich auf dem endlosen Band 1 befinden, öffnet sich die Zentriereinrichtung 31 über den Antriebszylinder 39. Dadurch wird die Drehachse D hergestellt und das Querverschieben des Kraftfahrzeugs 20 zum Zweck der Fahrzeugpositonierung über externe Positioniereinheiten im Fahrwerkeinstellstand freigegeben. Dabei wird der Grundkörper 4 vom Hinterrad 19 des Kraftfahrzeugs 20 ausgelenkt und dreht sich um die Drehachse D.

Durch Drehung der Antriebstrommel 2 werden die Hinterräder 19 über das endlose Band 1 in Drehung versetzt. Durch den Freiheitsgrad des Grundkörpers 4 um die Drehachse D hat der Grundkörper 4 die Möglichkeit, sich nach dem auf der Hinterachse eingestellten Spurwinkel auszurichten. Dadurch erfolgt ein querkraftfreies Drehen der Hinterräder 19 eines Kraftfahrzeugs 20 bei der Umschlagmessung.

Nach erfolgter Messung öffnet sich die Zentriereinrichtung 30. Dadurch wird die offene Stellung hergestellt, d.h. der Grundkörper 4 kann bezüglich der Grundplatte 7 frei schwimmen. So ist ein kräftefreies Einstellen des Spurwinkels möglich, da der Grundkörper 4 den Winkelbewegungen des Rades folgen kann.

Nach erfolgter Einstellung schließen sich die Zentriereinrichtungen 30 und 31. Dadurch wird die Mittelstellung des Grundkörpers 4 gegenüber der Grundplatte 7 hergestellt. Anschließend wird das Kraftfahrzeug 20 aus dem Fahrwerkeinstellstand gefördert. Zu diesem Zweck läuft das endlose Band 1 synchron zu der Ausfördergeschwindigkeit. Die Grundstellung des endlosen Bandes 1 mit seinen Unterbauten ist wieder vorhanden.

Bei dem erfindungsgemäßen endlosen Band in der Ausführung mit vertikaler Drehachse, Zwischenplatte mit Bremse und Grundkörper (Fig. 5 - 7) ergibt sich folgender, leicht abweichender Ablauf:

Nachdem das Kraftfahrzeug 20 seine Meßposition erreicht hat, d. h. die Hinterräder sich auf dem endlosen Band 1 befinden, öffnen die Mittenzentrierungen 9 der Zwischenplatte 6 über die Antriebszylinder 12. Das Querverschieben über das Linearführungssystem 8 wird zum Zweck der Fahrzeugpositionierung über externe Positioniereinheiten im Fahrwerksstand freigegeben. Wenn die gewünschte Fahrzeugposition erreicht ist, bleiben die Mittenzentrierungen 9 der Zwischenplatte 6 geöffnet und die Bremse 17 wird beaufschlagt und hält die Position über den Bremsbelag 18 fest.

Nun wird die Mittenzentrierung 10 des Grundkörpers 4 zurückgefahren und gibt die Schwenkbewegung des Grundkörpers 4 frei. Durch Drehung der Antriebstrommel 2 werden die Hinterräder 19 über das endlose Band 1 in Drehung versetzt. Durch den Freiheitsgrad des Grundkörpers 4 um den Drehzapfen 13 hat die Zwischenplatte 6 die Möglichkeit, sich nach dem auf der Hinterachse eingestellten Spurwinkel auszurichten. Dadurch erfolgt ein querkraftfreies Drehen der Hinterräder 19 eines Kraftfahrzeugs 20 bei der Umschlagmessung.

Nach erfolgter Messung wird die Mittenzentrierung 10 des Grundkörpers 4 über den Antriebszylinder 11 betätigt und legt sich an der Kulisse des Grundkörpers 4 an. Das Kraftfahrzeug wird aus dem Fahrwerksstand gefördert. Zu diesem Zweck läuft das endlose Band 1 synchron zu der Fördergeschwindigkeit. Beim Ausfördern des Kraftfahrzeugs oder kurz danach stellt sich die Mittenzentrierung 10 des Grundkörpers 4 ein. Wenn die Hinterräder 19 das endlose Band 1 verlassen haben, wird die Bremse 17 gelöst. Durch das Zufahren der Mittenzentrierungen 9 der Zwischenplatte 6 über die Antriebszylinder 12 wird die Mittenzentrierung der Zwischenplatte 6 hergestellt. Die Grundstellung des endlosen Bandes 1 mit seinen Unterbauten ist wieder vorhanden.

Die Erfindung wurde so beschrieben, wie das Fig. 1 zeigt, d.h. den Hinterrädern 19 ist ein Band 1 und den Vorderrädern 21 ist ein Laufwalzenpaar 22 zugeordnet. Die Anordnung kann auch umgekehrt sein, oder es können zwei Bänder 1 vorgesehen sein, wovon das eine den Vorderrädern 21 und das andere den Hinterrädern 19 zugeordnet ist.

## Patentansprüche

1. Vorrichtung zur Vermessung der Achsgeometrie an den Radachsen von Kraftfahrzeugen (20) bei drehenden Rädern (19, 21) mit mindestens zwei im wesentlichen im Abstand der Spurweite des Kraftfahrzeuges angeordneten, antreibbaren Aggregaten (1, 22), wobei die Vorder- bzw. Hinterräder (19, 21) des Kraftfahrzeuges (20) auf die Aggregate (1, 22) aufsetzbar sind und jedes Aggregat (1, 22) in einer horizontalen Ebene gegenüber einem Grundgestell angeordnet ist, wobei als Aggregate (1, 22) zur Aufnahme der Räder (12) mindestens einer Achse antreibbare, endlose, als Fördergurt ausgebildete Bänder (1) sowie Meßsysteme (25) vorhanden sind, **dadurch gekennzeichnet,** daß ein ein jedes Band (1) abstützender Grundkörper (4) vorhanden ist, der sich auf einer Grundplatte (7) abstützt, wobei schließbare Zentriervorrichtungen (9, 10; 30, 31) zum Definieren von Freiheitsgraden des Grundkörpers (4) bezüglich der Grundplatte (7) vorhanden sind.

2. Vorrichtung gemäß Anspruch 1, **dadurch gekennzeichnet,** daß der Grundkörper (4) in horizontaler Ebene schwimmend gelagert ist und durch Schließen keines, eines oder beider Zentriermittel (30, 31) der Grundkörper (4) bezüglich der Grundplatte (7) wahlweise frei schwimmbar, um eine Drehachse (D) schwenkbar oder in einer Mittelstellung zentrierbar ist.

3. Vorrichtung gemäß Anspruch 1, **dadurch gekennzeichnet,** daß der Grundkörper (4) eine vertikale Drehachse (D) aufweist und daß sich der Grundkörper (4) über eine Zwischenplatte (6) mittels eines Linearführungssystems (8) auf der Grundplatte (7) abstützt.

4. Vorrichtung gemäß Anspruch 1, **dadurch gekennzeichnet,** daß die Zentriereinrichtungen (30, 31) aus einem Hebelsystem bestehen, auf dem die Zentrierrollen (32, 33, 34) befestigt sind, welche durch Pneumatikzylinder (38, 39) verstellbar sind.

5. Vorrichtung gemäß Anspruch 1, **dadurch gekennzeichnet,** daß die Zentriereinrichtungen (30, 31) aus einem Hebelsystem bestehen, auf dem ein Schieber befestigt ist, welcher durch Pneumatikzylinder (38, 39) verstellbar ist.

6. Vorrichtung gemäß Anspruch 2, 4 oder 5, **dadurch gekennzeichnet,** daß die Zentrierrollen (32, 33) bzw. der Schieber hydraulisch, mechanisch oder elektrisch verfahrbar sind.

7. Vorrichtung gemäß Anspruch 3, **dadurch gekennzeichnet,** daß zur Festlegung der Zwischenplatte (6) gegenüber der Grundplatte (7) eine Bremse (17) vorgesehen ist.

## Claims

1. A device for measuring the axial geometry on the wheel axles of motor vehicles (20) when the wheels are rotating (19, 21) with at least two driveable units (1, 22) arranged substantially at the spacing of the track width of the motor vehicle, the front or rear wheels (19, 21) of the motor vehicle (20) being mountable on the units (1, 22) and each unit (1, 22) being arranged in a horizontal plane with respect to a frame, wherein measuring systems (25) and driveable bands (1) formed continuously as a conveyor belt are present as the units (1, 22) for receiving the wheels (12) of at least one axle, **characterised in that** there is a structure (4) which supports each band (1) and is supported on a base plate (7), wherein there are lockable centring means (9, 10; 30, 31) to define the degrees of freedom of the structure (4) with respect to the base plate (7).

2. A device according to Claim 1, **characterised in that** the structure (4) is mounted so as to float in the horizontal plane and by locking neither, one or both centring means (30, 31) the structure (4) can float freely with respect to the base plate (7), pivot about an axis of rotation (D) or be centred in a median position.

3. A device according to Claim 1, **characterised in that** the structure (4) has a vertical axis of rotation (D), and the structure (4) is supported on the base plate (7) by way of an intermediate plate (6) using a linear guide system (8).

4. A device according to Claim 1, **characterised in that** the centring means (30, 31) comprise a lever system to which the centring rollers (32, 33, 34) are secured which are displaceable by pneumatic cylinders (38, 39).

5. A device according to Claim 1, **characterised in that** the centring means (30, 31) comprise a lever system to which a slide is secured which is displaceable by pneumatic cylinders (38, 39).

6. A device according to Claim 2, 4 or 5, **characterised in that** the centring rollers (32, 33) or the slide are movable hydraulically, mechanically or electrically.

7. A device according to Claim 3, **characterised in that** a brake (17) is provided to fix the intermediate plate (6) in relation to the base plate (7).

## Revendications

1. Dispositif de mesure, alors que les roues (19,21) tournent, de la géométrie des essieux de véhicules (20) automobiles, comportant au moins deux unités (1,22), pouvant être entraînées, et disposées à une distance l'une de l'autre sensiblement égale à l'écartement des roues du véhicule automobile, les roues (19, 21) avant ou arrière du véhicule automobile (20) pouvant être posées sur les unités (1, 22) et chaque unité (1, 22) étant disposée dans un plan horizontal en vis-à-vis d'un chassis de base, des bandes (1) sous forme d'une courroie de transport, sans fin et pouvant être entrainées ainsi que des systèmes (25) de mesure étant présents en tant qu'unités (1, 22) de réception des roues (12) d'au moins un essieu, caractérisé en ce qu'un corps (4) de base, qui sert d'appui à chaque bande (1) et qui prend appui sur un plateau (7) de base, est présent, des dispositifs (9, 10; 30, 31) de centrage, qui peuvent être fermés et qui sont destinés à définir des degrés de liberté du corps (4) de base par rapport au plateau (7) de base étant présents.

2. Dispositif suivant la revendication 1, caractérisé en ce que le corps (4) de base est logé flottant dans un plan horizontal et le corps (4) de base peut flotter librement au choix par rapport au plateau (7) de base par fermeture d'aucun, de l'un ou des deux moyens (30,31) de centrage, pour pouvoir faire basculer un axe (D) de rotation ou pour pouvoir le centrer dans une position médiane.

3. Dispositif suivant la revendication 1, caractérisé en ce que le corps (4) de base comporte un axe vertical (D) de rotation et le corps (4) de base prend appui par l'intermédiaire d'un plateau (6) intermédiaire au moyen d'un système (8) de guidage rectiligne sur le plateau (7) de base.

4. Dispositif suivant la revendication 1, caractérisé en ce que les dispositifs (30,31) de centrage consistent en un système à levier, sur lequel les poulies (32, 33,34) de centrage sont fixées, lesquelles poulies peuvent être réglées par des vérins pneumatiques (38,39).

5. Dispositif suivant la revendication 1, caractérisé en ce que les dispositifs (30,31) de centrage consistent en un système à levier, sur lequel un coulisseau est fixé, lequel coulisseau peut être réglé par des vérins pneumatiques (38,39).

6. Dispositif suivant la revendication 2, 4 ou 5, caractérisé en ce que les poulies (32, 33) de centrage ou le coulisseau peuvent être déplacées hydrauliquement, mécaniquement ou électriquement.

7. Dispositif suivant la revendication 3, caractérisé en ce qu'il est prévu, pour fixer le plateau intermédiaire (6) par rapport au plateau (7) de base un frein (17).
